# EUROPÄISCHE PATENTSCHRIFT

(11) **EP 3 751 363 B1**
(45) Veröffentlichungstag und Bekanntmachung des Hinweises auf die Patenterteilung: **23.11.2022**
(21) Anmeldenummer: 19179346.2
(22) Anmeldetag: 11.06.2019
(51) Int. Cl.: G05B 19/042

(54) **VERFAHREN ZUM BETREIBEN EINES REDUNDANTEN AUTOMATISIERUNGSSYSTEMS UND ENTSPRECHENDES SYSTEM**
METHOD FOR OPERATING A REDUNDANT AUTOMATION SYSTEM
PROCÉDÉ DE FONCTIONNEMENT D'UN SYSTÈME D'AUTOMATISATION REDONDANT

(43) Veröffentlichungstag der Anmeldung: 16.12.2020
(73) Patentinhaber: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(56) Entgegenhaltungen:
- EP-A2- 1 136 896
- WO-A1-2005/052703
- DE-B3-102013 207 826
- US-A1- 2006 174 051
- JANSSEN D ET AL: "ETHERCAT - DER ETHERNET-FELDBUS FUNKTIONSWEISE UND EIGENSCHAFTEN - 1. TEIL", ELEKTRONIK, W E K A FACHZEITSCHRIFTEN-VERLAG GMBH, DE, Bd. 52, Nr. 23, 11. November 2003 (2003-11-11), Seiten 64, 66-72, XP001177407, ISSN: 0013-5658
- JANSSEN D ET AL: "ETHERCAT - DER ETHERNET-FELDBUS FUNKTIONSWEISE UND EIGENSCHAFTEN - 2. TEIL", ELEKTRONIK, W E K A FACHZEITSCHRIFTEN-VERLAG GMBH, DE, Bd. 52, Nr. 25, 9. Dezember 2003 (2003-12-09), Seiten 62-67, XP001538791, ISSN: 0013-5658

## Beschreibung

Die Erfindung betrifft ein Verfahren zum Betreiben eines redundanten, mit einem ersten und einem zweiten Teilsystem versehenen Automatisierungssystems, wobei eines dieser Teilsysteme als Master und das andere Teilsystem als Slave arbeitet und wobei für den Fall, dass der Master ausfällt, der Slave die Funktion des Masters übernimmt, gemäß Anspruch 1. Darüber hinaus betrifft die Erfindung ein redundant ausgelegtes Automatisierungssystem, welches ein erstes und ein zweites Teilsystem aufweist, wobei eines dieser Teilsysteme dazu ausgebildet ist, als Master zu arbeiten und das andere Teilsystem dazu ausgebildet ist, als Slave zu arbeiten, und wobei der Slave dazu ausgebildet ist, für den Fall, dass der Master ausfällt, die Funktion des Masters zu übernehmen, gemäß Anspruch 2.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformation für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über eine Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Aus dem Siemens-Katalog ST 70, Kapitel 6, Ausgabe 2011 ist ein redundantes, aus zwei Teilsystemen bestehendes Automatisierungssystem bekannt, welches dazu vorgesehen ist, die Verfügbarkeit einer zu steuernden Anlage zu erhöhen. Dieses Automatisierungssystem wird regelmäßig synchronisiert und es ist sichergestellt, dass der Ausfall eines dieser Teilsysteme sich nicht störend auf einen zu steuernden Prozess auswirkt, weil das andere Teilsystem die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen kann.

Aus der EP 0 907 912 B1 ist ein Synchronisationsverfahren für ein aus zwei Teilsystemen aufgebautes Automatisierungssystem bekannt. Dieses Synchronisationsverfahren basiert auf einer zeitlich synchronen Kopplung der beiden Teilsysteme, wobei an geeigneten Programmstellen, an denen ein Abgleich vorgesehen ist, beide Teilsysteme auf eine Antwort des jeweils anderen Teilnehmers warten und erst dann jeweils ihre Programmverarbeitung zeitlich synchron fortsetzen.

In der EP 2 657 797 A1 ist ein Verfahren zum Betreiben eines redundanten Automatisierungssystem offenbart, das ein besonders vorteilhaftes Synchronisationsverfahren beinhaltet.

In der US 2006/174051 A1 ist ein System offenbart, mit dem Daten eines Prozesses mit einem primären und einem sekundären Steuergerät verarbeitet werden können.

Die WO 2005/052703 A1 offenbart ein redundantes Automatisierungssystem mit zwei Automatisierungsgeräten.

In der DE 10 2013 207826 B3 ist ein Verfahren zum Betreiben eines Slave-Knotens eines digitalen Bussystems beschrieben.

In der EP 1 136 895 A2 wird ein hochverfügbares Rechnersystem sowie ein Verfahren zur Umschaltung von Bearbeitungsprogrammen eines hochverfügbaren Rechnersystems offenbart.

In Janssen D et al: "Ethercat - Der Ethernet-Feldbus Funktionsweise und Eigenschaften - 1. Teil, Elektronik, W E K A Fachzeitschriften-Verlag GmbH, DE, Bd. 5r2, Nr. 23, 11. November 2003 (2003-11-11), Seiten 64, 66-72, XP001177407, ISSN: 0013-0568, werden die Funktionsweise und die Eigenschaften des Ethercat Feldbus beschrieben.

Bei redundanten Automatisierungssystemen stellt sich grundsätzlich das Problem, eingehende sowie ausgehende Datenströme synchronisiert zu verarbeiten. Dies bedeutet im Wesentlichen, dass eingehende Datenströme auf beide redundanten Teilsysteme verdoppelt und ausgehende Datenströme, die in beiden redundanten Teilsystemen entstehen, vereinzelt werden müssen. Dies ist bei bislang bekannten Redundanzlösungen mit einer entsprechend hohen Rechenzeitbelastung auf den beiden Teilsystemen verbunden.

Der Erfindung liegt daher die Aufgabe zugrunde, ein Verfahren der eingangs genannten Art anzugeben, mittels welchem eine Belastung von Teilsystemen eines redundant ausgelegten Automatisierungssystems verringert werden kann.

Diese Aufgabe wird durch ein Verfahren gemäß Anspruch 1 gelöst.

Das erste Teilsystem fungiert hierbei als Slave, d.h. es läuft dem zweiten Teilsystem, das als Master fungiert, bezüglich der Verarbeitung des Datenpakets hinterher.

Die Vorteile der Erfindung liegen bei einer verbesserten Performanz der beiden Teilsysteme des Automatisierungssystems, da notwendige Synchronisationen zwischen den beiden Teilsystemen zur Realisierung der Redundanz bereits auf einer Ebene der Bitübertragungsschicht und/oder der Sicherungsschicht vorgenommen werden. Dadurch muss das von der externen Datenquelle empfangene Datenpaket höher gelagerte Ebenen von Schichten wie die Vermittlungsschicht oder die Transportschicht durchlaufen, bevor es zu einer Übertragung des Datenpakets von dem ersten Teilsystem zu dem zweiten Teilsystem kommt. Durch den Einsatz der vorliegenden Erfindung wird die Leistungsfähigkeit redundanter Automatisierungslösungen gesteigert, was neue, zusätzliche Einsatzmöglichkeiten eröffnet.

Das erste Teilsystem hinterlegt das Datenpaket im Rahmen der Verarbeitung des Datenpakets in einem elektronischen FIFO-Speicher des ersten Teilsystems. Der Speicher ist dazu ausgelegt, das Datenpaket in einer bestimmten Reihenfolge zu speichern und das Datenpaket in der bestimmten Reihenfolge wieder auszugeben.

Fällt das zweite Teilsystem aus, muss das erste Teilsystem die Verarbeitung der Applikationen stoßfrei fortsetzen. Hierzu kann das erste Teilsystem auf die in dem Speicher hinterlegten Daten zurückgreifen.

Nach der Hinterlegung des Datenpakets in den Speicher des ersten Teilsystems wird von dem zweiten Teilsystem eine Synchronisationsbotschaft an das erste Teilsystem übermittelt, um eine Verarbeitung des Datenpakets auf dem zweiten Teilsystem mit einer Verarbeitung des Datenpakets auf dem ersten Teilsystem zu synchronisieren.

Die Synchronisationsbotschaft umfasst eine Information darüber, welche Menge an Daten des in dem Speicher des ersten Systems hinterlegten Datenpakets das erste Teilsystem aus dem Speicher entnehmen soll. Dadurch muss nicht die gesamte (ggf. große) Menge an Daten des Datenpakets zum Zwecke der Synchronisation von dem zweiten zu dem ersten Teilsystem übertragen werden, sondern nur eine Information darüber, welche Menge an Daten das erste Teilsystem aus dem Speicher entnehmen soll.

Die zuvor formulierte Aufgabe wird zudem gelöst durch ein redundant ausgelegtes Automatisierungssystem nach Anspruch 2. Es weist ein erstes und ein zweites Teilsystem auf, wobei eines dieser Teilsysteme dazu ausgebildet ist, als Master zu arbeiten und das andere Teilsystem dazu ausgebildet ist, als Slave zu arbeiten, und wobei der Slave dazu ausgebildet ist, für den Fall, dass der Master ausfällt, die Funktion des Masters zu übernehmen. Das erste Teilsystem ist dazu ausgebildet, ein von einer externen Datenquelle erzeugtes Datenpaket zu empfangen und das Datenpaket auf einer Ebene der Bitübertragungsschicht und/oder der Sicherungsschicht an das zweite Teilsystem weiterzuleiten, bevor in dem ersten Teilsystem eine Verarbeitung des Datenpakets auf einer der Ebene der Bitübertragungsschicht und/oder der Sicherungsschicht Ebene einer übergeordneten Schicht erfolgt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein Automatisierungssystem mit zwei Teilsystemen;
- FIG 2: einen Ablauf einer zeitlichen Kopplung von zwei Teilsystemen bei einem eingehenden Datenpaket;
- FIG 3: den Ablauf gemäß FIG 1 bei einem Ausfall eines der beiden Teilsysteme; und
- FIG 4: einen Ablauf einer zeitlichen Kopplung von zwei Teilsystemen bei einem ausgehenden Datenpaket.

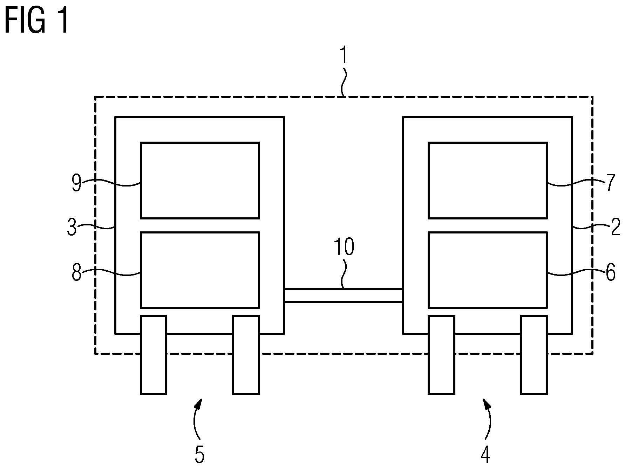

In FIG 1 ist ein als redundanter Netzwerkknoten ausgebildetes Automatisierungssystem 1 dargestellt. Das Automatisierungssystem 1 weist ein erstes Teilsystem 2 und ein zweites Teilsystem 3 auf. Das erste Teilsystem weist eine erste Netzwerkschnittstelle 4, das zweite Teilsystem eine zweite Netzwerkschnittstelle 5 auf, über die die beiden Teilsysteme 2, 3 mit externen Geräten (nicht dargestellt) kommunizieren können.

Intern kann das erste Teilsystem 2 in ein erstes Transportsystem 6 und ein erstes Applikationssystem 7 aufgeteilt werden, während das zweite Teilsystem 3 analog ein zweites Transportsystem 8 und ein zweites Applikationssystem 9 aufweist. Das erste Transportsystem 6 und das zweite Transportsystem übernehmen Aufgaben der Weitergabe bzw. Übertragung von Datenpaketen unter anderem zwischen den beiden Teilsystemen 2, 3. Hierzu sind die beiden Teilsysteme 2, 3 über eine Synchronisationsverbindung 10 miteinander gekoppelt.

Es wird angenommen, dass das zweite Teilsystem 3 als Master und das erste Teilsystem 2 als Slave bzw. als Reserve betrieben wird. Der Master ist im Hinblick auf die Steuerung eines technischen Prozesses führend und übernimmt die Prozesssteuerung. Der Slave übernimmt nur dann die Masterfunktion, falls der Master aufgrund einer Störung ausfällt.

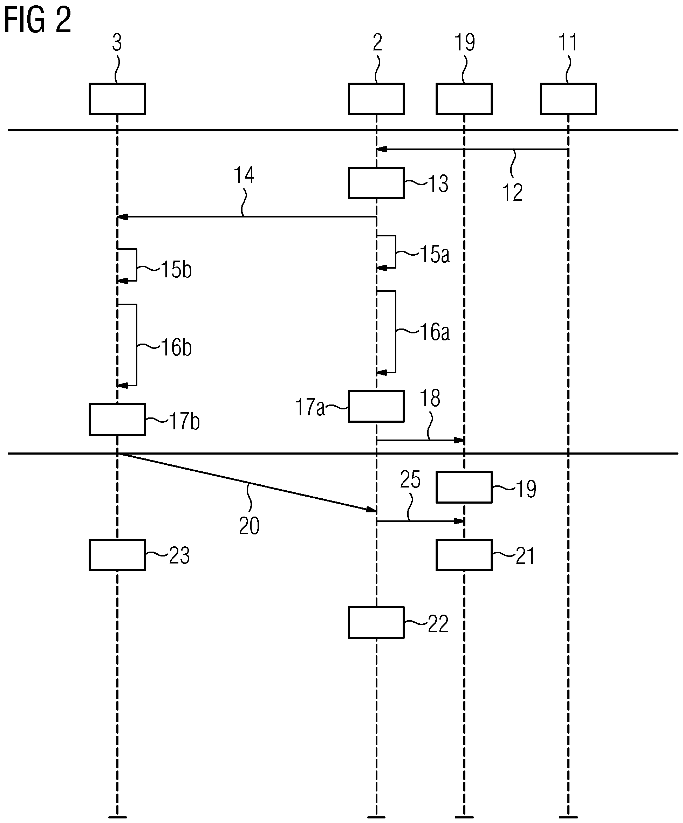

FIG 2 zeigt ein Sequenzdiagramm beim Ablauf einer Synchronisation der zwei redundant ausgelegten Teilsysteme 2, 3. Ein von einer externen Datenquelle 11 erzeugtes Datenpaket wird von dem ersten Teilsystem 2 in einem ersten Schritt 12 empfangen. Zunächst führt das erste Teilsystem 2 nun eine Analyse 13 des Datenpakets durch und ermittelt unter anderem einen Typ des Datenpakets und in dem Datenpaket enthaltene Zieladressen. Hierbei wird beispielsweise überprüft, ob eine in dem Datenpaket enthaltene IP-Adresse als Zieladresse mit einer IP-Adresse des Automatisierungssystems 1 übereinstimmt. Dies Prüfung wird stellvertretend für das zweite Teilsystem 3 von dem ersten Teilsystem 2 durchgeführt.

Auf einer Ebene der Bitübertragungsschicht und/oder der Sicherungsschicht findet nach erfolgreicher Adressenprüfung eine Übertragung 14 des Datenpakets von dem ersten Teilsystem 2 an das zweite Teilsystem 3 statt. Diese Übertragung 14 findet bereits statt, bevor das Datenpaket von dem ersten Teilsystem 2 auf einer Ebene einer höheren Schicht (Vermittlungsschicht, Transportschicht etc.) des Transportsystems 6 des ersten Teilsystems 2 weiterverarbeitet wird.

Auf beiden Teilsystemen 2, 3 erfolgt im Anschluss eine Zwischenpufferung 15a, 15b des Datenpaketes und eine Weiterverarbeitung 16a, 16b auf einer Ebene einer höheren Schicht (Vermittlungsschicht, Transportschicht etc.) des jeweiligen Transportsystems 6, 8 der beiden Teilsysteme 2, 3. Der für das jeweilige Applikationssystem 7, 9 relevante Teil des Datenpakets, die sogenannten Applikationsdaten 17a, 17b, werden auf beiden Teilsystemen 2, 3 von Applikationen wie Webservern dem Datenpaket entnommen. Dabei findet noch keine Datenverarbeitung statt, sondern lediglich eine Separierung der Applikationsdaten 17a, 17b von dem restlichen Teil des Datenpakets.

In dem ersten Teilsystem 2 werden die Applikationsdaten 17a im Rahmen eines Speichervorgangs 18 in einem als FIFO-Speicher (First In - First Out) ausgebildeten Speicher 19 hinterlegt. Dieser ist dazu ausgelegt, die Applikationsdaten 17a in einer bestimmten Reihenfolge zu speichern.

Nach der Hinterlegung der Applikationsdaten 17a in dem Speicher 19 des ersten Teilsystems 2 wird von dem zweiten Teilsystem 3 eine Synchronisationsbotschaft 20 an das erste Teilsystem 2 übermittelt. Die Synchronisationsbotschaft umfasst hierbei eine Information darüber, welche Menge an Applikationsdaten 17a aus dem Speicher 19 des ersten Teilsystems 2 entnommen werden soll. Der Ablauf der eigentlichen Synchronisation erfolgt wie in EP 2 657 797 A1 beschrieben. Auf diese Veröffentlichung soll hiermit vollumfänglich Bezug genommen werden.

Die Synchronisationsbotschaft 20 triggert eine Entnahmeanweisung 25, die direkt an den Speicher 19 adressiert ist. Nach der Entnahme 21 der Applikationsdaten 17a aus dem FIFO-Speicher 19 werden die Applikationsdaten 17a auf dem ersten Teilsystem 2 von einer Applikation (z.B. einem Webserver) einer Verarbeitung 22 unterzogen. Eine analoge Verarbeitung 23 der dort befindlichen Applikationsdaten 17b erfolgt auf dem zweiten Teilsystem 3.

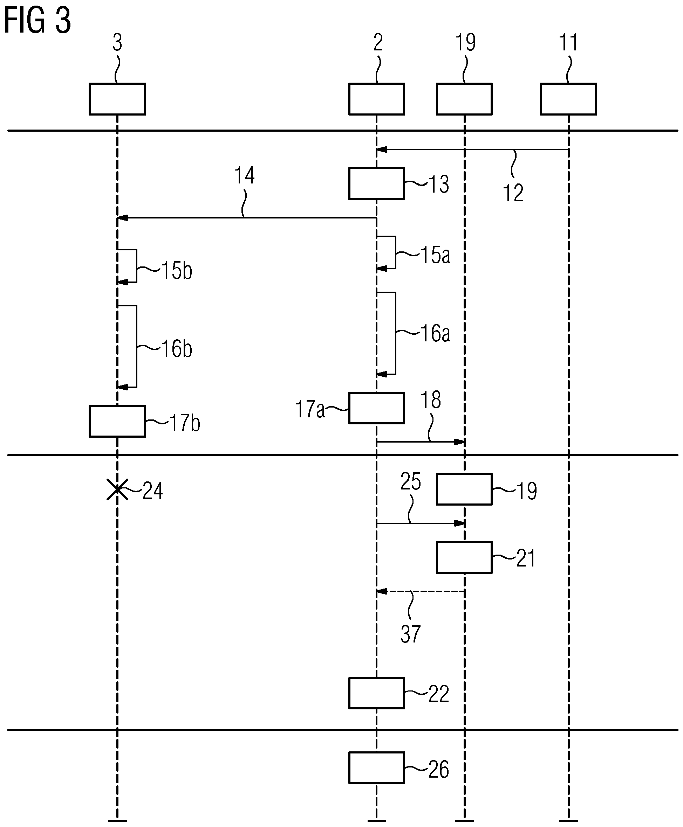

In FIG 3 ist im Wesentlichen dasselbe Sequenzdiagramm wie in FIG 2 gezeigt. Ein Unterschied liegt jedoch darin, dass nach dem Durchlaufen der höheren Ebenen von Schichten bzw. der Separierung der Applikationsdaten 17a, 17b von dem restlichen Teil des Datenpakets ein Ausfall 24 des zweiten (als Master fungierenden) Teilsystems 3 auftritt. Das erste (als Slave fungierende) Teilsystem 2 muss nun die Aufgaben des Mastersystems 3 übernehmen und beispielsweise den Betrieb einer Prozessanlage aufrechterhalten. Eine Datenübertragung zu externen Geräten soll dabei ohne Datenverlust fortgesetzt werden können.

Fällt das zweite Teilsystem 3 aus, muss das erste Teilsystem 2 die Verarbeitung auf Ebene der Applikationen stoßfrei fortsetzen. Dies ist möglich, indem das erste Teilsystem 2 auf eine zu einem bestimmten Zeitpunkt automatisch erzeugte Entnahmeanweisung 25 hin solange die im FIFO-Speicher 19 enthaltenen Applikationsdaten 17a entnimmt und im Rahmen einer Weitergabe 37 an die Applikationsverarbeitung 22 des ersten Teilsystems 2 weitergibt, bis der FIFO-Speicher 19 geleert ist. Der Zustand des ersten Teilsystems 2 ist dann identisch mit dem des zweiten Teilsystems 3 zum Zeitpunkt des Ausfalls 24. Nachdem der FIFO-Speicher 19 geleert wurde, liest die Applikation auf dem ersten Teilsystem 1 wieder direkt aus der Ebene der Weiterverarbeitung 16a, 16b auf einer Ebene einer höheren Schicht (Vermittlungsschicht, Transportschicht etc.) des Transportsystems 6 des ersten Teilsystems 2 (auch als sogenannter "Layerstack" bezeichnet). Eine Verbindung 26 zu einem Kommunikationspartner kann deshalb ohne Unterbrechung und ohne Datenverlust fortgesetzt werden, da der Zustand des Layerstacks 16a auf dem ersten Teilsystem 2 seit dem Ausfall 24 nicht verändert wurde.

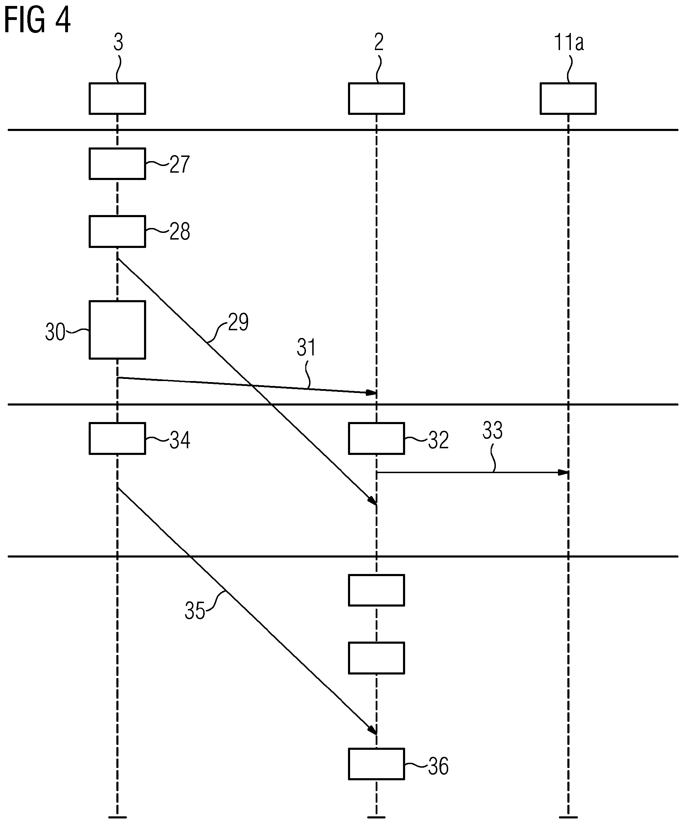

FIG 4 zeigt ein Sequenzdiagramm beim Aussenden von Datenpaketen. Ausgangspunkt sind von einer Applikation auf dem zweiten Teilsystem 3 verarbeitete Applikationsdaten 27. Aus einem an das Transportsystem 8 adressierten Sendeauftrag 28 des zweiten Teilsystems 3 resultierend wird eine erste Synchronisationsbotschaft 29 an das erste Teilsystem 2 übermittelt. Der Ablauf der eigentlichen Synchronisation erfolgt wie in EP 2 657 797 A1 beschrieben. Daraufhin erfolgt ein Verwerfen 30 der Applikationsdaten 27 auf dem zweiten Teilsystem 3 und eine Datenübertragung 31 der Applikationsdaten 27 an das erste Teilsystem 2. Auf dem ersten Teilsystem 2 schließt sich eine Sendeanweisung 32 an das Transportsystem 6 des ersten Teilsystems 6 an, auf welche eine Übertragung 33 der Applikationsdaten 27 an einen externen Empfänger 11a folgt. Die Datenübertragung 31 zwischen dem zweiten Teilsystem 3 und dem ersten Teilsystem 2 erfolgt dabei bereits auf der Ebene einer Bitübertragungsschicht und/oder einer Sicherungsschicht, wodurch das Verfahren besonders effizient gestaltet wird.

Parallel dazu erfolgt auf dem zweiten Teilsystem 3 eine Verarbeitung 34 von weiteren (neuen) Applikationsdaten. Mittels einer zweiten Synchronisationsbotschaft 35 werden diesbezügliche Informationen wie in EP 2 657 797 A1 beschrieben mit dem ersten Teilsystem 2 ausgetauscht. Dort erfolgt eine analoge weitere Verarbeitung 36 der neuen Applikationsdaten.

## Patentansprüche

1. Verfahren zum Betreiben eines redundant ausgelegten Automatisierungssystems (1), welches ein erstes Teilsystem (2) und ein zweites Teilsystem (3) aufweist, wobei eines dieser Teilsysteme (2,3) als Master und das andere dieser Teilsysteme (2, 3) als Slave arbeitet und wobei für den Fall, dass der Master ausfällt, der Slave die Funktion des Masters übernimmt, wobei das erste Teilsystem (2) ein von einer externen Datenquelle (11) erzeugtes Datenpaket empfängt und das Datenpaket auf einer Ebene der Bitübertragungsschicht und der Sicherungsschicht an das zweite Teilsystem (3) weiterleitet, bevor in dem ersten Teilsystem (2) eine Verarbeitung des Datenpakets auf einer der Ebene der Bitübertragungsschicht und der Sicherungsschicht übergeordneten Schicht erfolgt, wobei das erste Teilsystem (2) das Datenpaket nach der Verarbeitung auf einer Ebene der Vermittlungsschicht und auf einer Ebene der Transportschicht in einem FIFO-Speicher des ersten Teilsystems (2) hinterlegt, welcher dazu ausgelegt ist, das Datenpaket in einer bestimmten Reihenfolge zu speichern und das Datenpaket in der bestimmten Reihenfolge wieder auszugeben,
**dadurch gekennzeichnet, dass**
nach der Hinterlegung des Datenpakets in dem FIFO-Speicher (19) des ersten Teilsystems (2) eine Synchronisationsbotschaft (20) von dem zweiten Teilsystem (3) an das erste Teilsystem (2) übermittelt wird, um eine Verarbeitung des Datenpakets auf dem zweiten Teilsystem (3) mit einer Verarbeitung des Datenpakets auf dem ersten Teilsystem (2) zu synchronisieren,
wobei die Synchronisationsbotschaft (20) eine Information darüber umfasst, welche Menge an Daten des in dem Speicher (19) des ersten Teilsystems (2) hinterlegten Datenpakets das erste Teilsystem (2) aus dem Speicher (19) entnehmen soll.

2. Redundant ausgelegtes Automatisierungssystem (1), welches ein erstes Teilsystem (2) und ein zweites Teilsystem (3) aufweist, wobei eines dieser Teilsysteme (2, 3) dazu ausgebildet ist, als Master zu arbeiten und das andere dieser Teilsysteme (2, 3) dazu ausgebildet ist, als Slave zu arbeiten, und wobei der Slave dazu ausgebildet ist, für den Fall, dass der Master ausfällt, die Funktion des Masters zu übernehmen, wobei
das erste Teilsystem (2) dazu ausgebildet ist, ein von einer externen Datenquelle (11) erzeugtes Datenpaket zu empfangen und das Datenpaket auf einer Ebene der Bitübertragungsschicht und der Sicherungsschicht an das zweite Teilsystem (3) weiterzuleiten, bevor in dem ersten Teilsystem (2) eine Verarbeitung des Datenpakets auf einer der Ebene der Bitübertragungsschicht und der Sicherungsschicht übergeordneten Schicht erfolgt,
wobei das erste Teilsystem (2) dazu ausgebildet ist, das Datenpaket nach der Verarbeitung auf einer Ebene der Vermittlungsschicht und auf einer Ebene der Transportschicht in einem FIFO-Speicher des ersten Teilsystems (2) zu hinterlegen, welcher dazu ausgelegt ist, das Datenpaket in einer bestimmten Reihenfolge zu speichern und das Datenpaket in der bestimmten Reihenfolge wieder auszugeben,
**dadurch gekennzeichnet, dass**
das zweite Teilsystem (3) dazu ausgebildet ist, nach der Hinterlegung des Datenpakets in dem FIFO-Speicher (19) des ersten Teilsystems (2) eine Synchronisationsbotschaft (20) an das erste Teilsystem (2) zu übermitteln, um eine Verarbeitung des Datenpakets auf dem zweiten Teilsystem (3) mit einer Verarbeitung des Datenpakets auf dem ersten Teilsystem (2) zu synchronisieren,
wobei die Synchronisationsbotschaft (20) eine Information darüber umfasst, welche Menge an Daten des in dem Speicher (19) des ersten Teilsystems (2) hinterlegten Datenpakets das erste Teilsystem (2) aus dem Speicher (19) entnehmen soll.

## Claims

1. Method for operating a redundantly designed automation system (1) which has a first subsystem (2) and a second subsystem (3), wherein one of these subsystems (2, 3) operates as the master and the other subsystem (2, 3) operates as the slave and wherein in the event that the master fails the slave takes over the function of the master, wherein the first subsystem (2) receives a data packet generated by an external data source (11) and forwards the data packet at a level of the physical layer and the data link layer to the second subsystem (3) before a processing of the data packet takes place in the first subsystem (2) at a higher layer than the level of the physical layer and the data link layer, wherein the first subsystem (2) stores the data packet after the processing at a level of the network layer and at a level of the transport layer in a FIFO memory of the first subsystem (2) which is designed to save the data packet in a particular sequence and to output the data packet again in the particular sequence,
**characterised in that**
once the data packet has been stored in the FIFO memory (19) of the first subsystem (2), a synchronisation message (20) is transmitted from the second subsystem (3) to the first subsystem (2) in order to synchronise a processing of the data packet on the second subsystem (3) with a processing of the data packet on the first subsystem (2),
wherein the synchronisation message (20) includes information as to which quantity of data from the data packet stored in the memory (19) of the first subsystem (2) the first subsystem (2) should remove from the memory (19).

2. Redundantly designed automation system (1) which has a first subsystem (2) and a second subsystem (3), wherein one of these subsystems (2, 3) is configured to operate as the master and the other subsystem (2, 3) is configured to operate as the slave and wherein the slave is configured such that in the event that the master fails the slave takes over the function of the master, wherein
the first subsystem (2) is configured to receive a data packet generated by an external data source (11) and to forward the data packet at a level of the physical layer and the data link layer to the second subsystem (3) before a processing of the data packet takes place in the first subsystem (2) at a higher layer than the level of the physical layer and the data link layer,
wherein the first subsystem (2) is configured to store the data packet after the processing at a level of the network layer and at a level of the transport layer in a FIFO memory of the first subsystem (2) which is designed to save the data packet in a particular sequence and to output the data packet again in the particular sequence,
**characterised in that**
the second subsystem (3) is configured, once the data packet has been stored in the FIFO memory (19) of the first subsystem (2), to transmit a synchronisation message (20) to the first subsystem (2) in order to synchronise a processing of the data packet on the second subsystem (3) with a processing of the data packet on the first subsystem (2),
wherein the synchronisation message (20) includes information as to which quantity of data from the data packet stored in the memory (19) of the first subsystem (2) the first subsystem (2) should remove from the memory (19).

## Revendications

1. Procédé pour faire fonctionner un système (1) d'automatisation conçu de manière redondante, qui a un premier système (2) partiel et un deuxième système (3) partiel, dans lequel l'un de ces systèmes (2, 3) partiels travaille en maître, et l'autre de ces systèmes (2, 3) travaille en esclave, et dans lequel, dans le cas où le maître est défaillant, l'esclave prend en charge la fonction du maître, dans lequel le premier système (2) partiel reçoit un paquet de données produit par une source (11) extérieure de données et achemine le paquet de données sur un plan de la couche de transmission de bits et de la couche de sécurité au deuxième système (3) partiel, avant que ne s'effectue dans le premier système (2) partiel un traitement du paquet de données sur une couche supérieure hiérarchiquement au plan de la couche de transmission de bits et de la couche de sécurité, dans lequel le premier système (2) partiel met le paquet de données après le traitement sur un plan de la couche de commutation et sur un plan de la couche de transport, dans une mémoire FIFO du premier système (2) partiel, qui est conçue pour mettre le paquet de données en mémoire dans un ordre défini et redonner le paquet de données dans l'ordre défini,
**caractérisé en ce que**,
après avoir mis le paquet de données dans la mémoire FIFO du premier système (2) partiel, on transmet un message (20) de synchronisation du deuxième système (3) partiel au premier système (2) partiel pour synchroniser un traitement du paquet de données sur le deuxième système (3) partiel avec un traitement du paquet de données sur le premier système (2) partiel,
dans lequel le message (20) de synchronisation comprend une information sur la quantité de données du paquet de données mis dans la mémoire (19) du premier système (2) partiel, que le premier système (2) partiel doit prendre dans la mémoire (19).

2. Système (1) d'automatisation conçu de manière redondante, qui a un premier système (2) partiel et un deuxième système (3) partiel, dans lequel l'un de ces systèmes (2, 3) partiels est conçu pour travailler en maître et l'autre de ces systèmes (2, 3) partiel est conçu pour travailler en esclave, et dans lequel l'esclave est constitué pour prendre en charge, dans le cas où le maître est défaillant, la fonction du maître, dans lequel le premier système (2) partiel est constitué pour recevoir un paquet de données produit par une source (11) extérieure de données et pour acheminer au deuxième système (3) partiel le paquet de données sur un plan de la couche de transmission de bits et de la couche de sécurité, avant que ne s'effectue dans le premier système (2) partiel un traitement du paquet de données sur une couche supérieure hiérarchiquement au plan de la couche de transmission de bits et de la couche de sécurité,
dans lequel le premier système (2) partiel est constitué pour mettre le paquet de données, après le traitement sur un plan de la couche de commutation et sur un plan de la couche de transport, dans une mémoire FIFO du premier système (2) partiel, qui est conçue pour mettre le paquet de données en mémoire dans un ordre défini et redonner le paquet de mémoire dans l'ordre défini, **caractérisé en ce que**
le deuxième système (3) partiel est constitué pour, après la mise du paquet de données dans la mémoire (19) FIFO du premier système (2) partiel, transmettre un message (20) de synchronisation au premier système (2) partiel, afin de synchroniser un traitement du paquet de données sur le deuxième système (3) partiel avec un traitement de données sur le premier système (2) partiel,
dans lequel le message (20) de synchronisation comprend une information sur la quantité de données du paquet de données mis dans la mémoire (19) du premier système (2) partiel, que le premier système (2) partiel doit prendre dans la mémoire (19).
